# EUROPEAN PATENT APPLICATION

(11) **EP 4 210 010 A1**
(43) Date of publication of application: **12.07.2023**
(21) Application number: 21864043.1
(22) Date of filing: 05.08.2021
(51) Int. Cl.: G07G 1/00

(54) **SELF-CHECKOUT DEVICE**

(30) Priority: 04.09.2020 JP 2020149257
(71) Applicant: Toshiba TEC Kabushiki Kaisha, Tokyo 141-8562 (JP)
(72) Inventor: KAWAGUCHI, Yuki, Tokyo 141-8562 (JP); NAITO, Hidehiro, Tokyo 141-8562 (JP); YAJIMA, Shinsuke, Tokyo 141-8562 (JP); HATTORI, Daisuke, Tokyo 141-8562 (JP); ITO, Masaki, Tokyo 141-8562 (JP); SAITOU, Takahiro, Tokyo 141-8562 (JP); SUZUKI, Kota, Tokyo 141-8562 (JP)
(74) Representative: Hoffmann Eitle
(86) International application number: PCT/JP2021/029055
(87) International publication number: WO 2022/049985

(57) **Abstract**

A self-checkout apparatus of an embodiment has: a display unit that displays information to inform an operator; a reading unit that is positioned in a lateral side of the display unit and receives input of information of a product by reading a code symbol; and a housing base that is positioned below the display unit, the housing base for placing the product after information reception by the reading unit and for placing a housing tool for housing the product; wherein the reading unit is positioned between the display unit and the housing base in a height direction.

## Description

### FIELD

An embodiment of the present invention relates to a self-checkout apparatus.

### BACKGROUND

Recently, in retail shops, etc., introduction of self-checkout apparatuses with which customers carry out product registration processes and/or payment processes by themselves has been advancing. As a conventional self-checkout apparatus, for example, an apparatus provided with a main body unit provided with a scanner and display, a product table for placing unregistered products provided in one lateral side of the main body unit, and a bagging base for bagging registered products provided in the other lateral side of the main body unit has been proposed (for example, see Patent Literature 1).

### SUMMARY OF THE INVENTION

### Problem to be Solved by the Invention

A conventional self-checkout apparatus is structured to position a main body unit, which is provided with a scanner and a display, at the center. Therefore, for example, when a customer is to cause the scanner to read a product and move the product to a bagging base, movement over the main body unit is required, and the motion flow of the product becomes long. Therefore, for example, if there is a heavy product or if there are many products, product registration tasks take time with high probability, which is inconvenient for the customer.

A problem to be solved by the present invention is to provide a self-checkout apparatus which further facilitates the customer to carry out the tasks.

### Means for Solving Problem

A self-checkout apparatus of an embodiment includes: a display unit that displays information to inform an operator; a reading unit that is positioned in a lateral side of the display unit and receives input of information of a product by reading a code symbol; and a housing base that is positioned below the display unit, the housing base for placing the product after information reception by the reading unit and for placing a housing tool for housing the product; wherein the reading unit is positioned between the display unit and the housing base in a height direction.

### BRIEF DESCRIPTION OF DRAWINGS

FIG. 1 is a perspective view illustrating an example of exterior of a self-checkout apparatus of an embodiment.
FIG. 2 is a schematic front view illustrating an example of exterior of the self-checkout apparatus of the embodiment.
FIG. 3 is a block diagram illustrating an example of a hardware configuration of the self-checkout apparatus of the embodiment.

### DETAILED DESCRIPTION

Hereinafter, with reference to drawings, a self-checkout apparatus 1 according to an embodiment will be described.

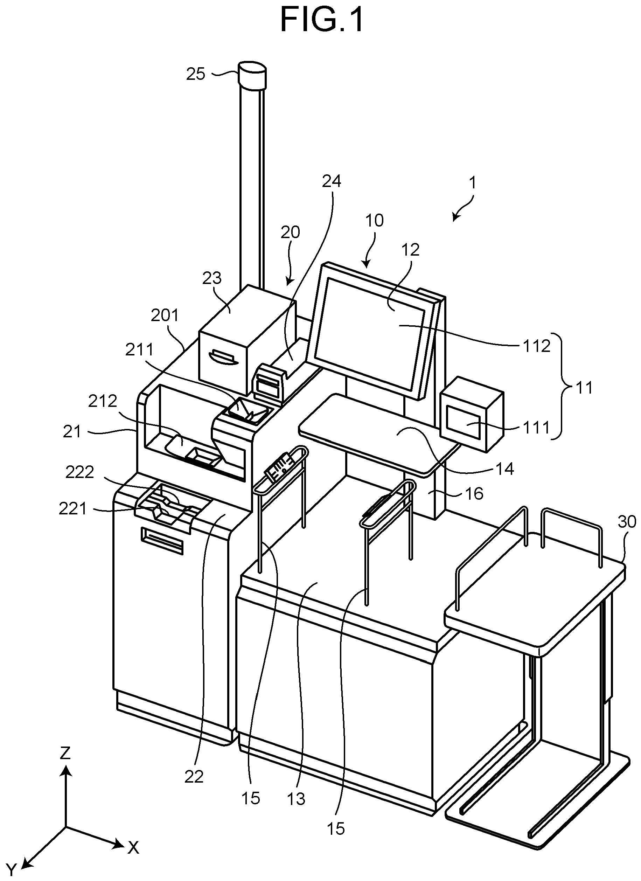

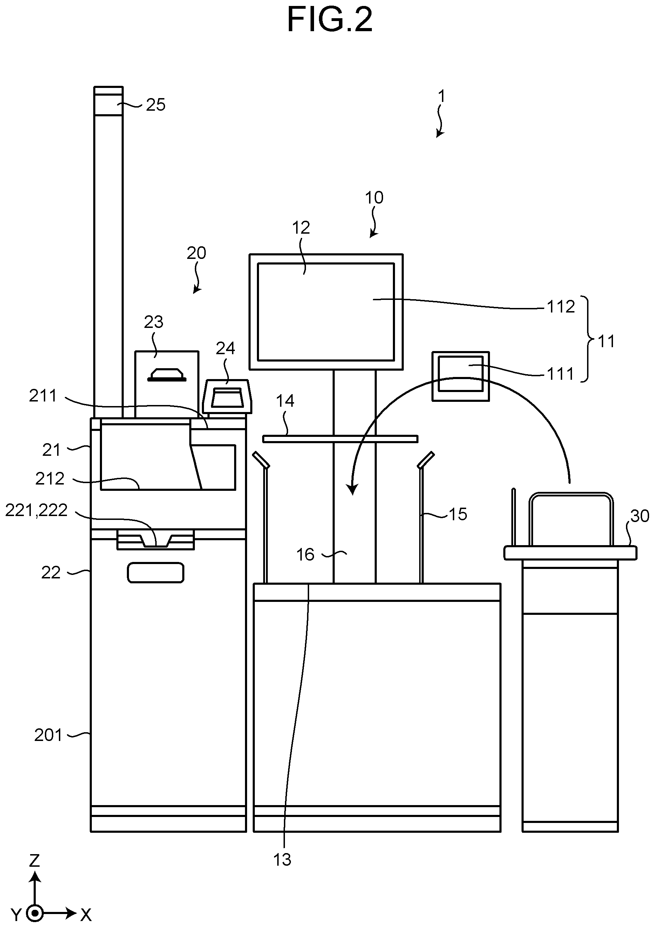

FIG. 1 is a perspective view illustrating an example of exterior of a self-checkout apparatus 1. FIG. 2 is a schematic front view illustrating an example of exterior of the self-checkout apparatus 1.

The self-checkout apparatus 1 is an apparatus for a customer to carry out product registration and payment by himself/herself. The self-checkout apparatus 1 is provided with a central unit 10, a payment unit 20, and a basket table 30.

The basket table 30 is provided to be adjacent to one of lateral sides (right side when viewing the drawing) of the central unit 10, which is a product registration/bagging unit. The basket table 30 is a table on which products before information reception are placed. In other words, the basket table 30 is a base on which a shopping basket, in which products before product registration are placed, is to be placed.

The basket table 30 is provided with a flat top board which has an approximately rectangular shape and serves as a placement surface of a shopping basket. The top board is movable in a vertical direction (Z-axis direction) and can be fixed at an arbitrary height. A structure related to the vertical movement of the top board is not particularly limited, and any of various movement mechanisms can be employed.

For example, a pair of rail members is provided to rise from a bottom board of the basket table 30, which is in contact with a floor surface, and a pair of guide members projecting downward is attached at the positions of a bottom surface of the top board which are corresponding to the rail members. Moreover, the rail members and the guide members are configured to be slidably engage with each other, thereby realizing the vertical movement of the top board.

Also, in this case, the basket table 30 has a mechanism (for example, screws, etc.) which fixes the guide members to the rail members so that the top board is not moved downward due to the weight of products when the shopping basket, in which the products are placed, is placed on the top board. By virtue of this, the top board can be fixed at an arbitrary height. Therefore, the customer can adjust the height of an installation surface of the shopping basket depending on the height of himself/herself. Note that space for installing a shopping cart instead may be provided instead of the basket table 30.

The central unit 10 is a unit for carrying out registration and bagging of the products, which are in the shopping basket placed on the basket table 30. The central unit 10 is provided with, for example, an input unit 11, a display device 12, a bagging base 13, and a temporary table 14.

The bagging base 13 (example of "housing base") is a base which is positioned below the display device 12 for placing products (goods) or a bag (example of "housing tool"), which houses the products, after information reception by the input unit 11. Note that the bagging base 13 may be provided with a weight sensor, which measures the weight of the goods placed on the bagging base 13.

A support rod 16 is provided to rise in a depth side in a depth direction (negative direction in Y-axis) of the bagging base 13. In the structure illustrated in FIG. 1, the support rod 16 is provided at approximately the center in a width direction (X-axis direction) of the bagging base 13. Note that the position where the support rod 16 is provided to rise is not limited thereto, but may be configured to be provided to rise from a position which is close to the side (left side when viewing the drawing) in which the later-described payment unit 20 is provided with respect to the approximate center of the bagging base 13.

The display device 12 is attached to an upper part of the support rod 16. In other words, the display device 12 is positioned in the depth side in the depth direction of the bagging base 13.

The display device 12 is an example of a display unit and is, for example, a liquid crystal display panel. The display device 12 displays information to inform the customer (example of an operator).

Also, the display device 12 is provided with a touch screen 112 on a display screen. The touch screen 112 is an operation unit which receives manual input from the customer. The touch screen 112 is provided to be overlapped with a surface of the display device 12 and receives operations corresponding to images displayed by the display device 12. For example, while the display device 12 is displaying a sales object, the touch screen 112 receives manual input which is selecting the object and made by the customer.

The support rod 16 creates large space between the display device 12 and the bagging base 13 in a height direction (Z-axis direction) to form the space for a bagging task.

Also, in a lateral side (right side when viewing the drawing) of the display device 12, a scanner 111 (example of "reading unit") is provided. Also, the scanner 111 is positioned in the depth side in the depth direction of the bagging base 13 and in one of the lateral sides in the width direction of the bagging base 13.

The scanner 111 may be supported by a support member (not illustrated) extending from the support rod 16 or may be supported by another support rod (not illustrated) which is provided to rise from the bagging base 13. Also, the scanner 111 is positioned at a height between the display device 12 and the bagging base 13 in the height direction.

The scanner 111 is a reading apparatus which reads code symbols such as bar codes and two-dimensional codes. The code symbols are displayed, for example, on the products, labels attached on the products, or a list.

The scanner 111 and the touch screen 112 constitutes the input unit 11. The input unit 11 receives input of the information of the products. The products are, for example, valuable goods on sale (sales objects) and are tangible objects. The scanner 111 receives input of the information of the products by reading the code symbols. Also, the touch screen 112 receives input of the information of the products by receiving manual input from the customer.

Note that, as the input unit 11, a camera, a keyboard, and/or buttons may be provided. The camera is an image capturing apparatus which capture images of the products and output the images. The keyboard and the buttons are operation units which receive manual input from the customer.

The temporary table 14 is provided below the display device 12. The temporary table 14 is supported by the support rod 16. In other words, regarding the temporary table 14, the temporary table 14 is positioned between the display device 12 and the bagging base 13 in the height direction. Also, the temporary table 14 is positioned below the scanner 111 in the height direction. Note that the temporary table 14 may be supported by a support rod or the like which is provided to rise from the bagging base 13.

In the front side in the depth direction of the bagging base 13, a pair of bag supporting parts 15 is provided to rise. One of the bag supporting parts 15 is rising from an end (left side when viewing the drawing) in the side in which the payment unit 20 of the bagging base 13 is provided. The other one of the bag supporting parts 15 provided to rise from a position close to the side in which the payment unit 20 is provided with respect to the position at which the scanner 111 is provided in the width direction.

The customer can maintain the bag in an open state above the bagging base 13 by hooking a handle or the like of the bag on upper ends of the bag supporting part 15.

In the other lateral side (left side when viewing the drawing) of the central unit 10, the payment unit 20 is provided to be adjacent thereto. The payment unit 20 is an example of a payment part. Based on the information received by the input unit 11, the payment unit 20 carries out money transfer or an accounting process by information transfer instead of the money transfer. The payment unit 20 is separated from the bagging base 13. In other words, the payment unit 20 is separated from the central unit 10.

The payment unit 20 is provided with a coin-change machine 21 and a paper-note-change machine 22. Also, on an upper surface of a chassis 201 of the payment unit 20, a printer (printing unit) 23 and a card reader (reading apparatus) 24 are placed. Furthermore, the payment unit 20 is provided with a warning lamp 25.

The coin-change machine 21 is provided with a coin slot 211 and a coin discharge opening 212. The paper-note-change machine 22 is provided with a paper-note slot 221 and a paper-note discharge opening 222. These (the coin slot 211, the coin discharge opening 212, the paper-note slot 221, and the paper-note discharge opening 222) are provided on the chassis 201. The coin slot 211 is a money receiving opening which receives inserting of coins.

The coin discharge opening 212 is a money discharge opening which discharges coins. The paper-note slot 221 is a money receiving opening which receives inserting of paper notes. The paper-note discharge opening 222 is a money discharge opening which discharges paper notes.

The coin discharge opening 212 is formed in the shape of a tray which receives dispensed coins. A most troublesome task of money (coins and paper note transfer) transfer is pick-up of the coins dispensed into the coin discharge opening 212. Therefore, the coin discharge opening 212 is provided at a height which is convenient for picking up coins. This height is set in consideration of the height of the person who is expected as a user.

The other money in/out openings (the coin slot 211, the paper-note slot 221, the paper-note discharge opening 222) are provided based on the height of the coin discharge opening 212 and provided to be close to the coin discharge opening 212 as much as possible. The coin slot 211 is formed in a funnel shape in consideration of the readiness of throwing coins thereinto.

Also, the coin slot 211 is disposed at a position higher than the coin discharge opening 212. Both of the paper-note slot 221 and the paper-note discharge opening 222 are structured to have upward openings and are disposed at positions lower than the coin discharge opening 212.

The printer 23 prints and issues, for example, receipts or coupon tickets. The card reader 24 reads the information stored in a credit card, which is used for payment. When a situation in which, for example, a recovery operation by a shop employee is required, the warning lamp 25 informs the people around of the occurrence of the situation by blinking light.

Note that the self-checkout apparatus 1 may be provided with a reading apparatus (for example, a reader/writer for electronic money payment), which reads data retained by recording media for other electronic payment other than credit payment.

Next, a motion flow of carrying out a registration operation of products will be described by using FIG. 2. An arrow in the drawing of FIG. 2 illustrates the motion flow of the products. Note that FIG. 2 illustrates a state in which the central unit 10 and the basket table 30 are viewed from the front.

In a reading operation and a bagging operation of the products carried out by the customer, the motion flow (arrow in the drawing) of the products goes from the basket table 30, which is a right unit, to the bagging base 13, which is provided in the central unit 10, through the scanner 111, which is provided in the central unit 10.

Herein, in the self-checkout apparatus 1, the scanner 111 is provided at the position close to one of the lateral sides (right side). In addition, the basket table 30 is provided to be adjacent in the lateral side in which the scanner 111 is provided. Therefore, in the self-checkout apparatus 1, the motion flow from the basket table 30 to the scanner 111 can be shortened.

Also, in the self-checkout apparatus 1, when viewed in the direction from the front, the layout of the scanner 111 and the bagging base 13 in the height direction, the depth direction, and the width direction is in mutually adjacent (close) positional relation. By virtue of this, the customer can insert the products into a bag by moving the product, which has been lifted up to the position of the scanner 111, to the left side while the customer is at the position facing the scanner 111. Therefore, the transition from the reading operation to the bagging operation can be smoothly carried out.

Also, in the present embodiment, the scanner 111 is disposed in the lateral side (right side) with respect to the work space of the bagging base 13 in the width direction. Therefore, even in a case in which the customer takes out the once bagged products (the products after product registration) and organizes the goods in the bag, the scanner 111 can be prevented from re-reading the bar codes or the like attached on the products unless the products are moved to the lateral side (right side). In other words, the self-checkout apparatus 1 of the present embodiment can prevent double registration of products.

Moreover, since the display device 12 is positioned above the bagging base 13, the customer who is standing in front of the scanner 111 and carrying out the task can easily direct his/her visual line toward the display device 12 before bagging the products which have been read by the scanner 111. Therefore, the customer can easily check the contents which are displayed by the display device 12 and are related to the products, which have been read by the scanner 111.

Meanwhile, if the support rod 16 is provided to rise from a position close to the left side in the width direction with respect to the center of the bagging base 13, the display device 12 attached to an upper part of the support rod 16 is present at a position close to the left side in which the payment unit 20 is provided. Therefore, in this case, when the customer stands in front of the payment unit 20 to carry out operation thereon, the display device 12 is present at a position where the device can be easily viewed by the customer.

In other words, if the support rod 16 is provided to rise from the position close to the left side with respect to the center of the bagging base 13 in the width direction, the customer can operate the payment unit 20 while viewing the display device 12 without changing the standing position of himself/herself when carrying out an accounting process.

Also, in the present embodiment, the temporary table 14 is provided for placing the products which are desired to be temporarily put aside for bagging among the products after product registration. Examples of the products which are desired to be temporarily put aside include the products which are desired to be bagged in the uppermost part (in other words, bagged at the end) such as bread and eggs.

Herein, if the scanner 111 is positioned below the display device 12, the scanner 111 may erroneously read the bar codes or the like attached on the products placed on the temporary table 14. In such a case, the products are registered twice, and this is inconvenient for the customer.

On the other hand, in the self-checkout apparatus 1 according to the present embodiment, the scanner 111 is positioned in the lateral side (right side) of the display device 12, the bar codes or the like attached on the products, which are placed on the temporary table 14, are not erroneously read, and double registration of the products can be prevented.

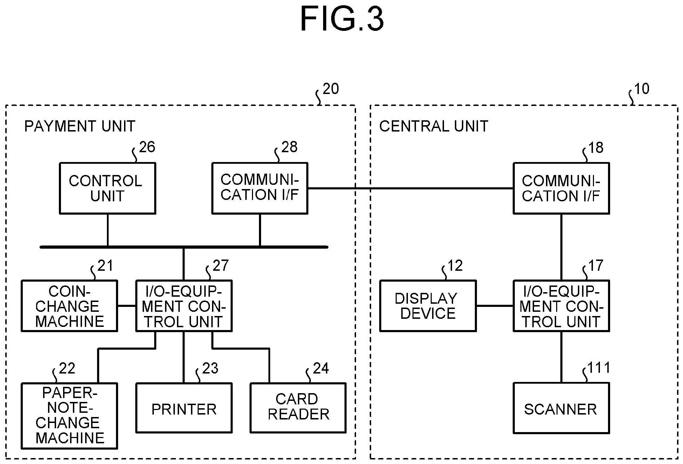

Next, a hardware configuration of the self-checkout apparatus 1 according to the present embodiment will be described. FIG. 3 is a block diagram illustrating an example of the hardware configuration of the self-checkout apparatus 1.

As illustrated in the block diagram of FIG. 3, the payment unit 20 is further provided with a control unit 26, an I/O-equipment control unit 27, and a communication I/F 28. Moreover, the central unit 10 is further provided with an I/O-equipment control unit 17 and a communication I/F 18.

The communication I/F (interfaces) 18 and 28 communicably connect the apparatus of its own to an external apparatus. The I/O-equipment control unit 27 connects the coin-change machine 21, the paper-note-change machine 22, the printer 23, and the card reader 24 to the control unit 26.

The I/O-equipment control unit 17 connects the display device 12 and the scanner 111 to the control unit 26 via the communication I/F 18 and 28. Note that, the I/O-equipment control unit 17 may connect a weight sensor to the control unit 26 via the communication I/F 18 and 28.

The control unit 26 has a central processing unit (CPU), a read only memory (ROM), a random access memory (RAM). The ROM stores various programs and/or various data executed by the CPU. The R_AM temporarily stores the data and/or the program when the CPU executes the program. The control unit 26 integrally controls the units provided in the apparatus of its own by expanding and executing the program, which has been read from the ROM by the CPU, in the RAM.

Note that, in the present embodiment, the payment unit 20 is provided with the control unit 26. However, the central unit 10 may be provided with the control unit. Also, both of the central unit 10 and the payment unit 20 may be configured to be provided with control units which integrally control the respective units.

In such a configuration, the self-checkout apparatus 1 is used for checkout which is carried out by the customer himself/herself. In other words, the customer holds the bar code or the like which is an encoded product code, over the scanner 111.

The scanner 111 reads the bar code or the like and outputs the product code. When the scanner 111 outputs the product code, the control unit 26 references, for example, a Price Look Up (PLU) file stored in the apparatus of its own or in a storage unit of an external apparatus connected online. The PLU file is a file in which the names, prices, etc. of the products are recorded in association with the product codes, for example, in a form of a table.

The control unit 26 obtains the information which is related to the product code read by the scanner 111 in the information recorded in the PLU file. Then, the information thereof is recorded as the information of the product, and the product price is added to a purchase amount. In this manner, product registration is carried out.

When the customer finishes the product registration and bagging at the self-checkout apparatus 1, the customer then makes payment. When an operation for advancing to payment is received from the customer, the self-checkout apparatus 1 displays a total price of the prices of the products which have already been registered in the display device 12. Along with this process, the payment unit 20 starts accepting a payment operation made by the customer. The self-checkout apparatus 1 finishes one transaction by the payment completion and makes a transition to a state of standing by for the start of a next transaction.

Next, effects of the self-checkout apparatus 1 according to the present embodiment will be described. The self-checkout apparatus 1 according to the present embodiment is provided with the display device 12 which displays the information to inform the customer, the scanner 111 which is positioned in the lateral side of the display device 12 and receives input of the information of the products, and the bagging base 13 which is positioned below the display device 12 for placing a bag for housing the products after the information reception by the scanner 111. Also, the scanner 111 is positioned between the display device 12 and the bagging base 13 in the height direction.

In the self-checkout apparatus 1 according to the present embodiment, the bagging base 13 is positioned in the lateral side of the scanner 111 in the width direction and in the lower side of the scanner 111 in the height direction.

Therefore, after the customer causes the product to be read by the scanner 111 at the position opposed to the scanner 111, the customer can smoothly house the product in the bag by moving the product to the lateral side without changing the standing position of herself/himself. In other words, the customer is facilitated to do the product registration task and the task of housing the product, which has been registered, in the bag.

Also, the scanner 111 is positioned in the lateral side of the bagging base 13 in the width direction. Therefore, even when the customer takes out the products, which have once been bagged after product registration, and organizes the goods in the bag, the scanner 111 is prevented from erroneously reading the bar codes or the like attached to the products unless the products are moved to the lateral side.

In other words, the self-checkout apparatus 1 according to the present embodiment can prevent double registration of products. According to this configuration, the customer does no longer have to pay attention to avoid the products from being registered twice during the task, and the tasks of product registration and bagging or the like of the products are facilitated.

Also, the self-checkout apparatus 1 according to the present embodiment is provided with the temporary table 14 which is positioned between the display device 12 and the bagging base 13 for temporarily placing the products after information reception by the scanner 111. By virtue of this, the customer can temporarily put aside the products which have undergone product registration and are not desired to be bagged immediately (for example, products such as bread and eggs desired to be bagged at the end).

Furthermore, since the scanner 111 is positioned in the lateral side of the display device 12, erroneous reading of the bar code or the like attached to the product placed on the temporary table 14, which is positioned below the display device 12, is prevented. In other words, the self-checkout apparatus 1 according to the present embodiment can prevent double registration of products even when the temporary table 14 is provided.

Also, the self-checkout apparatus 1 according to the present embodiment is provided with the basket table 30 which is positioned in the lateral side of the bagging base 13 and in the side in which the scanner 111 is positioned for placing the products before the information reception by the scanner 111. By virtue of this, the customer is facilitated to pick up the products from the shopping basket, and the task of product registration is also facilitated.

Also, the self-checkout apparatus 1 according to the present embodiment is provided with the payment unit 20 which is positioned in the lateral side of the bagging base 13 and in the opposite side of the basket table 30 and carries out an accounting process based on the information received by the scanner 111. By virtue of this, the customer can carry out the accounting process immediately after bagging of the products.

Also, the display device 12 and the scanner 111 of the self-checkout apparatus 1 according to the present embodiment are positioned in the depth side of the bagging base 13 in the depth direction. By virtue of this, the space for the bagging task can be expanded in the depth direction. In other words, the customer is facilitated to do the bagging task of the products.

Hereinabove, embodiments of the present invention have been described. However, these embodiments are presented as examples and are not intended to limit the scope of the invention. These novel embodiments can be carried out in various other forms, and various omissions, replacements, and changes can be made within the range not departing from the gist of the invention. These embodiments and modifications thereof are included in the scope or gist of the invention and are included in the invention described in claims and the scope of equivalents thereof.

For example, in the above described embodiment, the self-checkout apparatus 1 is illustrated and described in a manner that the central unit 10, the payment unit 20, and the basket table 30 have different chassis. However, the structure of the self-checkout apparatus 1 is not limited thereto.

In other words, the self-checkout apparatus 1 may have a structure in which the central unit 10, the payment unit 20, and the basket table 30 are integrated or may have a structure in which the central unit 10 and the payment unit 20 or the basket table 30 are integrated.

Also, for example, in the above described embodiment, the form in which the payment unit 20 is provided has been described. However, instead of providing the payment unit 20, the self-checkout apparatus may be a cashless-dedicated self-checkout apparatus in which a payment terminal which carries out electronic payment (payment by credit cards, electronic money, etc.) is connected to the central unit 10.

Also, for example, in the above described embodiment, the form in which the bag supporting parts 15 are provided to rise from the bagging base 13. However, the bagging base 13 may not be provided with the bag supporting part 15. The form in which the bag supporting parts 15 are not provided is effective especially when a box is used as a housing tool instead of a bag. In such a case, not providing the bag supporting parts 15 enlarges the space of the placement surface of the box and facilitates the customer to carry out tasks.

Also, for example, in the above described embodiment, the bagging base 13 of the central unit 10 extends toward the basket table 30 than the right-side bag supporting part 15 in the width direction. However, the bagging base 13 may have a width to the position at which the right-side bag supporting part 15 is provided to rise in the width direction. In such a case, the basket table 30 may be closer to the central unit 10, or space may be provided between the basket table 30 and the central unit 10.

In a case in which space is provided between the basket table 30 and the central unit 10, a hook for hanging shopping bags (plastic bags) to be sold to customers and/or a base or the like for placing a hand scanner used for reading large product, etc. may be provided by using this space.

### CITATION LIST

### Patent Literature

Patent Literature 1: JP 2019-40348 A

## Claims

1. A self-checkout apparatus comprising:
a display unit that displays information to inform an operator;
a reading unit that is positioned in a lateral side of the display unit and receives input of information of a product by reading a code symbol; and
a housing base that is positioned below the display unit, the housing base for placing the product after information reception by the reading unit and for placing ε housing tool for housing the product; wherein
the reading unit is positioned between the display unit and the housing base in a height direction.

2. The self-checkout apparatus according to claim 1, further comprising a temporary table that is positioned between the display unit and the housing base, the temporary table for temporarily placing the product after the information reception by the reading unit.

3. The self-checkout apparatus according to claim 1 or 2, further comprising a table that is positioned in a lateral side of the housing base and in the side in which the reading unit is positioned, the table for placing the product before information reception by the reading unit.

4. The self-checkout apparatus according to claim 3, further comprising a payment part that is positioned in a lateral side of the housing base and in an opposite side of the table and carries out an accounting process based on the information received by the reading unit.

5. The self-checkout apparatus according to any one of claims 1 to 4, wherein the display unit and the reading unit are positioned in a depth side of the housing base in a depth direction.
